# FASCICULE DE BREVET EUROPEEN

(11) **EP 1 673 682 B1**
(45) Date de publication et mention de la délivrance du brevet: **11.08.2010**
(21) Numéro de dépôt: 04791514.5
(22) Date de dépôt: 12.10.2004
(51) Int. Cl.: G06F 1/00, H04L 9/00

(54) **Procédé de protection d un algorithme cryptographique**
Verfahren zum Schutz eines kryptographischen Algorithmus
Method for protection of a cryptographic algorithm

(30) Priorité: 17.10.2003 FR 0312152
(43) Date de publication de la demande: 28.06.2006
(73) Titulaire: Sagem Défense Sécurité, 75015 Paris (FR)
(72) Inventeur: CARLIER, Vincent, F-91400 ORSAY (FR); CHABANNE, Hervé, F-78200 MANTES LA JOLIE (FR); DOTTAX, Emmanuelle, F-75011 PARIS (FR)
(74) Mandataire: Fruchard, Guy
(86) Numéro de dépôt international: PCT/FR2004/002579
(87) Numéro de publication internationale: WO 2005/038692

(56) Documents cités:
- DATABASE INSPEC THE INSTITUTION OF ELECTRICAL ENGINEERS, STEVENAGE, GB; novembre 2000 (2000-11), NISHIGAKI M ; SOGA M ; IKUMA T ; TAKUBO A: "Copy protection of binary programs by data scratching and dynamic restoration" XP002287501 Database accession no. 6792623
- SCHNEIER B: "Applied Cryptography, PASSAGE" APPLIED CRYPTOGRAPHY. PROTOCOLS, ALGORITHMS, AND SOURCE CODE IN C, NEW YORK, JOHN WILEY & SONS, US, 1996, pages 176-177, XP002287502 ISBN: 0-471-11709-9
- XIANGYU ZHANG ET AL: "Hiding program slices for software security" PROCEEDINGS OF THE INTERNATIONAL SYMPOSIUM ON CODE GENERATION AND OPTIMIZATION, CGO'03, 23 mars 2003 (2003-03-23), pages 325-336, XP010638092

## Description

La présente invention concerne un procédé de protection d'un algorithme cryptographique.

### ARRIERE PLAN DE L'INVENTION

On sait que la façon la plus efficace de conserver la confidentialité lors d'une transmission de données est de chiffrer les données au moyen d'un algorithme cryptographique.

A cet effet on connaît des dispositifs comportant une unité de traitement programmable associés à un fichier de configuration comportant un algorithme cryptographique personnalisé. L'entité réalisant l'algorithme cryptographique personnalisé est généralement différente de l'entité réalisant le dispositif utilisant l'algorithme cryptographique. Afin de protéger l'algorithme cryptographique pendant le transport depuis son lieu d'élaboration jusqu'à son chargement dans le dispositif auquel il est destiné, on procède habituellement à un chiffrement de l'algorithme lui-même en utilisant une clé de protection. Sous cette forme chiffrée, l'algorithme cryptographique ne peut être exécuté par le dispositif auquel il est destiné. Lors du chargement de l'algorithme cryptographique dans le dispositif auquel il est destiné, un déchiffrement est donc effectué dans l'unité de traitement en utilisant la clé de protection qui y a été communiquée par le fabricant du dispositif et introduite par celui-ci dans l'unité de traitement. Le fabricant du dispositif ayant accès à la clé de protection, il est possible pour un fraudeur qui réussirait à obtenir d'une part l'algorithme cryptographique chiffré et d'autre part la clé détenue par le fabricant du dispositif, d'effectuer un déchiffrement de l'algorithme cryptographique lui permettant de reconstituer cet algorithme. En outre, après son déchiffrement l'algorithme n'est plus protégé de sorte qu'il est absolument nécessaire de disposer de moyens de sécurité particuliers pour protéger l'unité de traitement pendant l'exécution de l'algorithme.

### OBJET DE L'INVENTION

Le document "Copy protection of binary programs by data scratching and dynamic restoration"; NISHIGAKI M, SOGA M, IKUMA T , TAKUBO A; DATABASE INSPEC, STEVENAGE, GB (Database accession no. 6792623); novembre 2000 (2000-11); XP002287501 décrit un procédé de protection d'un algorithme cryptographique sous forme d'un logiciel informatique, consistant à la décomposition du logiciel en sections, dont chacune peut être chiffrée et chargée dans le dispositif auquel le logiciel est destiné, indépendamment des autres sections. Dans ce document, la décomposition est mise en oeuvre en découpant le logiciel en sous-programmes aux fonctions complémentaires.

Un but de l'invention est de proposer un procédé de protection d'un algorithme cryptographique y compris lors de son exécution dans une unité de traitement sans qu'il soit nécessaire de faire intervenir le fabricant de l'unité de traitement.

### BREVE DESCRIPTION DE L'INVENTION

En vue de la réalisation de ce but, on propose, selon l'invention, un procédé de protection d'un algorithme cryptographique décomposable sous forme de polynômes initiaux à au moins deux variables et ayant un degré au moins égal à deux, le procédé comportant les étapes de réaliser des polynômes combinés, chacun obtenu à partir d'au moins deux polynômes initiaux, et de mettre en oeuvre les polynômes combinés dans l'unité de traitement.

Ainsi, la combinaison d'au moins deux polynômes initiaux ayant un degré au moins égal à deux, réalise un polynôme ayant un degré au moins égal à quatre dont il est extrêmement difficile de retrouver les constituants en particulier lorsque le nombre de variables de ces polynômes est suffisamment important. L'algorithme ainsi transformé est donc protégé et peut donc être transmis avec un degré de sécurité satisfaisant. Par ailleurs, les polynômes combinés sont directement exécutables au même titre que les polynômes initiaux. Aucune transformation n'est nécessaire lors de la configuration de l'unité de traitement de sorte que l'algorithme reste protégé pendant son exécution.

Selon une version avantageuse de l'invention, un effacement partiel de l'unité de traitement, et de la mémoire contenant le fichier de configuration lorsque la configuration est présente, est provoqué dans le cas d'une intrusion dans le dispositif. Dès l'instant où quelques informations sont manquantes la difficulté de reconstitution de l'algorithme est considérablement augmentée de sorte qu'un effacement partiel seulement suffit à protéger l'algorithme.

Selon un autre aspect avantageux de l'invention, le procédé comporte en outre l'étape de combiner chaque polynôme combiné avec une fonction, et de combiner le polynôme combiné suivant avec une fonction inverse. Cette transformation complémentaire augmente encore la difficulté de retrouver les polynômes initiaux sans toutefois nuire au caractère exécutable du polynôme combiné en raison de l'élimination d'une fonction directe par la fonction inverse correspondante lors du passage d'un polynôme combiné au polynôme combiné suivant.

De préférence, la fonction combinée à chaque polynôme combiné est une fonction linéaire. Le degré du polynôme combiné reste alors inchangé, de sorte que l'espace pris en mémoire par le polynôme combiné reste lui-même inchangé.

### DESCRIPTION DETAILLEE DE L'INVENTION

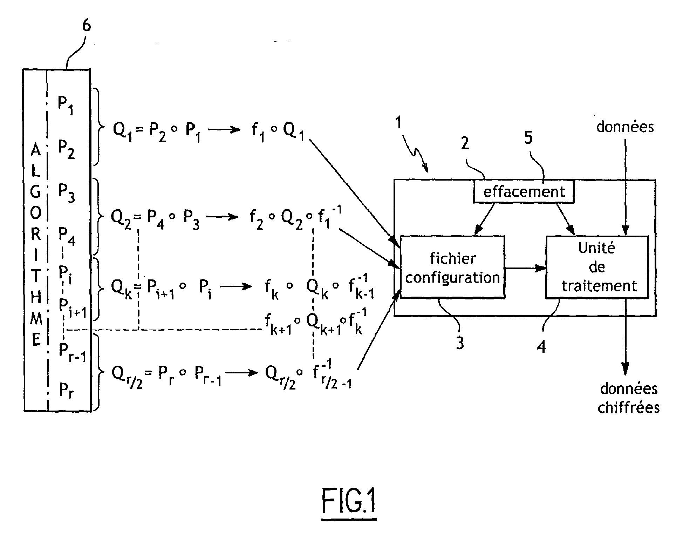

D'autres caractéristiques et avantages de l'invention apparaîtront à la lecture de la description qui suit d'un mode de mise en oeuvre particulier non limitatif de l'invention en relation avec la figure unique ci-jointe qui est un diagramme schématique illustrant le procédé selon l'invention.

En référence à la figure, le procédé de protection d'un algorithme cryptographique selon l'invention est destiné à être mis en oeuvre dans un dispositif de chiffrement 1 comportant de façon connue en soi un boîtier 2 dans lequel est disposée une mémoire volatile 3 destinée à contenir un fichier de configuration et reliée à une unité de traitement 4 configurable par le fichier de configuration pour effectuer un chiffrement de données introduites dans le dispositif.

Egalement de façon connue en soi, le dispositif 1 comporte un organe d'effacement 5 relié à la mémoire 3 et à l'unité de traitement 4, pour assurer en cas d'intrusion un effacement au moins partiel des informations qu'elles contiennent. A cet effet la mémoire et l'unité de traitement 4 sont de préférence volatiles de sorte qu'une interruption même brève de l'alimentation provoque un effacement partiel des informations contenues dans la mémoire et/ou l'unité de traitement.

Selon l'invention, l'algorithme cryptographique 6 qui est destiné à être introduit dans le fichier de configuration 3 est tout d'abord divisé selon un procédé connu en soi, selon des rondes représentées par des polynômes initiaux P₁, P₂, P₃, P₄..., Pᵢ, Pᵢ₊₁..., Pᵣ₋₁, Pᵣ, à plusieurs variables et ayant un degré au moins égal à deux. Les polynômes initiaux sont déterminés en utilisant différentes clés (sauf répétition au hasard), ou différentes sous-clés d'une même clé. Les clés ou les sous-clés peuvent être totalement intégrées aux polynômes ou constituer des variables supplémentaires au sein des polynômes. Les polynômes initiaux Pᵢ sont ensuite combinés, deux par deux dans le mode de mise en oeuvre illustré, selon une combinai son mathématique de fonctions, pour obtenir des polynômes combinés Q₁ = P₂ o P₁, Q₂ = P₄ o P₃... Qₖ = Pᵢ₊₁ o P_{i...}, Q_{r/2} = Pᵣ o Pᵣ₋₁. Lorsque les polynômes Pᵢ ont un degré égal à deux, les polynômes combinés Qₖ ainsi obtenus ont un degré égal à quatre.

Dans le mode de mise en oeuvre préféré illustré, chaque polynôme Qₖ est en outre combiné avec une fonction fₖ, de préférence une fonction linéaire, et le polynôme combiné suivant est combiné de façon correspondante avec la fonction inverse fₖ⁻¹, à l'exception bien entendu du premier et du dernier polynômes combinés qui ne sont combinés qu'avec une fonction directe pour l'un et une fonction inverse pour l'autre.

Avant son chargement dans la mémoire 3 sous forme d'un fichier de configuration, l'algorithme cryptographique est donc représenté par les fonctions polynomiales f₁ o Q₁, f₂ ο Q₂ ο f₁⁻¹..., fₖ ο Qₖ ο fₖ₋₁⁻¹, fₖ₊₁ ο Qₖ₊₁ ο fₖ⁻¹, ..., Qr/2 o f_{r/2-1}⁻¹.

Bien entendu, l'invention n'est pas limitée au mode de mise en oeuvre décrit et on peut y apporter des variantes de réalisation sans sortir du cadre de l'invention tel que défini par les revendications.

En particulier, bien que les rondes initiales aient été représentées sous forme d'un seul polynôme initial par ronde, chaque ronde peut contenir plusieurs polynômes initiaux. Les polynômes initiaux peuvent donc être combinés au sein d'une même ronde ou en combinant plusieurs rondes entre elles.

Bien que le procédé ait été décrit en relation avec un dispositif comprenant une unité de traitement 4 associée à une mémoire 3 destinée à recevoir l'algorithme sous forme d'un fichier de configuration, ce qui permet d'effectuer une modification de la configuration sans avoir à effectuer un retour du dispositif en atelier, on peut prévoir une mise en oeuvre directe de l'algorithme dans l'unité de traitement par une configuration de l'unité de traitement en atelier. Dans ce cas la configuration ne peut plus être modifiée sans un retour en atelier.

Bien que le procédé selon l'invention ait été décrit en combinant les polynômes initiaux deux à deux, il peut être nécessaire pour certains algorithmes de regrouper les polynômes élémentaires selon un nombre supérieur à deux. Par exemple pour l'algorithme dénommé DES dans lequel les rondes sont entrelacées, il est nécessaire de combiner plus de deux polynômes initiaux pour obtenir des polynômes combinés exécutables de façon sûre selon le procédé décrit ci-dessus.

Bien que l'invention ait été décrite avec une étape comprenant une combinaison avec une fonction et la fonction inverse, on peut prévoir de constituer le fichier de configuration simplement à partir des polynômes combinés Qₖ.

Au lieu d'effectuer la combinaison des différents polynômes combinés Qₖ avec des fonctions fₖ différentes pour chacun des polynômes combinés Qₖ comme décrit ci-dessus, on peut combiner chaque polynôme combiné avec la même fonction f puis avec la fonction inverse f⁻¹.

## Revendications

1. Procédé de protection d'un algorithme cryptographique (6) en vue de son exécution dans un dispositif (1) comprenant une unité de traitement programmable (4), l'algorithme étant décomposable sous forme de polynômes initiaux (Pᵢ) à au moins deux variables et ayant un degré au moins égal à deux, **caractérisé en ce que** le procédé comporte les étapes de réaliser des polynômes combinés (Qₖ) chacun obtenu à partir d'au moins deux polynômes initiaux (Pᵢ, Pᵢ₊₁), et de mettre en oeuvre les polynômes combinés (Qₖ) dans l'unité de traitement programmable (4).

2. Procédé selon la revendication 1, **caractérisé en ce qu'**il comporte en outre l'étape de mémoriser les polynômes combinés (Qₖ) sous forme d'un fichier de configuration chargé dans une mémoire (3) associée à l'unité de traitement (4).

3. Procédé selon la revendication 2, **caractérisé en ce que** la mémoire (3) et l'unité de traitement programmable (4) sont associés à un organe d'effacement (5) provoquant, dans le cas d'une intrusion dans le dispositif, un effacement de l'unité de traitement (4), et un effacement de la mémoire (3) contenant le fichier de configuration lorsque la configuration est présente dans cette mémoire.

4. Procédé selon la revendication 1, **caractérisé en ce qu'**il comporte l'étape de combiner chaque polynôme combiné (Qₖ) avec une fonction (fₖ), et de combiner le polynôme combiné suivant (Qₖ₊₁) avec une fonction inverse (fₖ⁻¹) .

5. Procédé selon la revendication 4, **caractérisé en ce que** la fonction (fₖ) combinée à chaque polynôme combiné (Qₖ) est une fonction linéaire.

## Claims

1. A method of protecting a cryptographic algorithm (6) for execution in a device (1) comprising programmable processor unit (4), the algorithm being separable into the form of initial polynomials (Pᵢ) of at least two variables each, and having a degree of not less than two, the method being **characterized in that** it comprises the steps of providing combined polynomials (Qₖ) each obtained from at least two initial polynomials (Pᵢ, Pᵢ₊₁), and of implementing the combined polynomials (Qₖ) in the programmable processor unit (4).

2. A method according to claim 1, **characterized in that** it further comprises the step of storing the combined polynomials (Qₖ) in the form of a configuration file that is loaded into a memory (3) associated with the processor unit (4).

3. A method according to claim 2, **characterized in that** the memory (3) and the programmable processor unit (4) are associated with an eraser member (5) serving, in the event of an intrusion into the device, to erase the processor unit (4), and to erase the memory (3) containing the configuration file when the configuration is present in said memory.

4. A method according to claim 1, **characterized in that** it includes the step of combining each combined polynomial (Qₖ) with a function (fₖ), and of combining the following combined polynomial (Qₖ₊₁) with an inverse function (fₖ⁻¹) .

5. A method according to claim 4, **characterized in that** the function (fₖ) combined with each combined polynomial (Qₖ) is a linear function.

## Patentansprüche

1. Verfahren zum Schutz eines kryptographischen Algorithmus (6) im Hinblick auf seine Ausführung in einer Vorrichtung (1), die eine programmierbare Verarbeitungseinheit (4) umfasst, wobei der Algorithmus in Form von Ausgangspolynomen (Pᵢ) mit mindestens zwei Variablen und einem Grad von mindestens gleich zwei zerlegbar ist, **dadurch gekennzeichnet, dass** das Verfahren die Schritte des Erzeugens von kombinierten Polynomen (Qₖ), die jeweils aus mindestens zwei Ausgangspolynomen (Pᵢ, P_{i,1}) erhalten werden, und des Benutzens der kombinierten Polynome (Qₖ) in der programmierbaren Verarbeitungseinheit (4) umfasst.

2. Verfahren nach Anspruch 1, **dadurch gekennzeichnet, dass** es ferner den Schritt des Speicherns der kombinierten Polynome (Qₖ) in Form einer Konfigurationsdatei umfasst, die in einen Speicher (3) geladen ist, der mit der Verarbeitungseinheit (4) verbunden ist.

3. Verfahren nach Anspruch 2, **dadurch gekennzeichnet, dass** der Speicher (3) und die programmierbare Verarbeitungseinheit (4) mit einem Löschelement (5) verbunden sind, das im Falle eines unberechtigten Eindringens in die Vorrichtung ein Löschen der Verarbeitungseinheit (4) und ein Löschen des Speichers (3), der die Konfigurationsdatei enthält, hervorruft, wenn die Konfiguration in diesem Speicher vorhanden ist.

4. Verfahren nach Anspruch 1, **dadurch gekennzeichnet, dass** es den Schritt des Kombinierens jedes kombinierten Polynoms (Qₖ) mit einer Funktion (fₖ) und des Kombinierens des folgenden kombinierten Polynoms (Qₖ₊₁ mit einer Umkehrfunktion (fₖ⁻¹) umfasst.

5. Verfahren nach Anspruch 4, **dadurch gekennzeichnet, dass** die mit jedem kombinierten Polynom (Qₖ) kombinierte Funktion (fₖ) eine lineare Funktion ist.
